## Europäisches Patentamt
## European Patent Office
## Office européen des brevets

(19)

(11) Veröffentlichungsnummer : **0 135 611**
**B1**

(12) **EUROPÄISCHE PATENTSCHRIFT**

(45) Veröffentlichungstag der Patentschrift :
09.09.87

(51) Int. Cl.⁴ : **A 47 J 31/057**

(21) Anmeldenummer : **83109772.0**

(22) Anmeldetag : **29.09.83**

(54) **Elektrisch beheizte Filterkaffeemaschine.**

(43) Veröffentlichungstag der Anmeldung :
03.04.85 Patentblatt 85/14

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
DE-A- 1 778 386
DE-A- 2 023 590
DE-A- 2 210 138
DE-B- 2 556 231
FR-A- 1 303 192
US-A- 2 169 852
US-A- 2 568 474
US-A- 3 570 390

(73) Patentinhaber : **INTROPA TRADING SA**
**Ave. Justo Arosemena y Calle 31, No. 3-80 P.O. Box 7412**
**Panama 5 (PA)**

(72) Erfinder : **Der Erfinder hat auf seine Nennung verzichtet**

(74) Vertreter : **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

EP 0 135 611 B1

Jouve, 18, rue St-Denis, 75001 Paris, France

**Beschreibung**

Die Erfindung bezieht sich auf eine Filterkaffeemaschine, mit einem Frischwasserbehälter und einer unmittelbar unterhalb des Frischwasserbehälters angeordneten, elektrisch beheizbaren Heißwasserkammer, einem zwischen dem Frischwasserbehälter und der Heißwasserkammer angeordneten Wassereinlaßventil, einem Steigrohr, das die Heißwasserkammer mit einem Brühwasserauslauf verbindet, und einem vertikal in die Heißwasserkammer ragenden Entlüftungsrohr.

Aus der US-A-21 69 852 ist eine Filterkaffeemaschine bekannt, bei der unmittelbar über der Heißwasserkammer ein Frischwasserbehälter angeordnet ist. Frischwasserbehälter und Heißwasserkammer sind über ein Wassereinlaßventil verbunden, das mit einem Schwimmer versehen ist, welcher das Ventil schließt, wenn ein vorgegebener Wasserstand in der Heißwasserkammer erreicht ist. Außerdem ragt in die Heißwasserkammer ein Entlüftungsrohr, das gleichzeitig als Steigrohr dient und in einem über dem Frischwasserbehälter angeordneten Filterbecher endet. Die Heißwasserkammer ist nach Angaben in dieser Druckschrift so dimensioniert, daß sie zwei bis drei Tassen Wasser aufnehmen kann, während der Frischwasserbehälter auf etwa die doppelte Volumengröße ausgelegt ist. Diese Kaffeemaschine erlaubt es allerdings nicht, die über das Wassereinlaßventil in die Heißwasserkammer jeweils in einem Brühzyklus einströmende Wassermenge durch den Benutzer der Kaffeemaschine zu variieren.

Eine ähnliche Filterkaffeemaschine ist bekannt aus der US-A-25 68 474. Bei dieser Filterkaffeemaschine ist ein separates Steigrohr für das Brühwasser vorgesehen. Das Entlüftungsrohr enthält deshalb ein Rückschlagventil, welches zusammen mit dem Wassereinlaßventil schließt, sobald der Druck in der Heißwasserkammer so weit ansteigt, daß Brühwasser durch das Steigrohr ausgestoßen wird. Auch mit dieser Filterkaffeemaschine läßt sich die in jeweils einem Brühzyklus in der Heißwasserkammer aufgebrühte Wassermenge durch den Benutzer nicht variieren.

Der vorliegenden Erfindung liegt die Aufgabe zugrunde, eine Filterkaffeemaschine der oben angesprochenen Art derart weiterzubilden, daß der Füllgrad der Heißwasserkammer durch den Benutzer der Maschine auf einfache Weise variiert werden kann.

Diese Aufgabe wird gemäß der vorliegenden Erfindung dadurch gelöst, daß in dem Entlüftungsrohr ein Luftauslaßventil angeordnet ist und daß das Entlüftungsrohr in seiner axialen Richtung verschiebbar ausgebildet ist, so daß es je nach der gewählten Stellung unterschiedlich weit in die Heißwasserkammer hineinragt und dadurch bewirkt, daß die Heißwasserkammer nur bis zum unteren Rand dieses Entlüftungsrohres gefüllt wird.

Das Entlüftungsrohr kann durch seine vertikale Verschiebbarkeit mehr oder weniger weit in die Heißwasserkammer hineingeschoben werden. Da sich die Heißwasserkammer nur jeweils bis zum unteren Rand des Entlüftungsrohres mit Frischwasser füllen kann, ist dem Benutzer damit eine sehr einfache Möglichkeit gegeben, die für jeweils einen Brühzyklus benutzte Frischwassermenge zu variieren.

Damit kann die Anzahl der von der Maschine durchzuführenden Brühzyklen verändert werden. Bei beispielsweise einer Achttassenmaschine kann damit auch eine geringere Menge Kaffee von beispielsweise nur sechs Tassen zubereitet werden, ohne daß die gewünschte Zahl der Zyklen von beispielsweise zwei oder drei geändert wird. Damit läßt sich auch, wenn auch nur in begrenztem Maß, die Gesamtbrühdauer verändern.

Eine bevorzugte Dimensionierung der Heißwasserkammer ist in Anspruch 2 angegeben.

Bevor auf die Weiterbildungen nach den Ansprüchen 3 bis 12 eingegangen wird, sollen einige Besonderheiten der vorliegenden Kaffeemaschine angesprochen werden. Da die Menge des in einem Zyklus aus der Heißwasserkammer austretenden Wassers relativ hoch sein kann, empfiehlt es sich, besondere Vorkehrungen dagegen zu treffen, daß das Brühwasser nicht mit zu hoher Geschwindigkeit in den Filterbecher eingegeben wird. Durch die relativ hohe Leistung, mit der solche Maschinen arbeiten, etwa 1 100 Watt bei einer Achttassenmaschine, entsteht ein hoher Dampfdruck, der das Brühwasser in einem starken Schwall austreten läßt, wobei das in der Heißwasserkammer verdampfende Restwasser relativ viel Dampf mit sich führt. Ohne besondere Vorkehrungen besteht dabei die Gefahr, daß Brühwasser aus dem Filterbecher herausspritzt oder das Kaffeemehl zu stark an den Wänden des Filters hochdrückt. In den im folgenden angesprochenen Unteransprüchen sind unterschiedliche Maßnahmen angegeben, die hier Abhilfe schaffen und die alleine oder auch in Kombination miteinander anwendbar sind.

Durch die im Anspruch 3 angegebene Maßnahme wird dem in der Heißwasserkammer entstehenden Dampfdruck dadurch entgegengewirkt, daß rechtzeitig vor dem Ende des Ausstoßes von Restwasser bereits Dampf abgelassen wird, der sich mit dem durch das Steigrohr beförderten Wasser mischt. Dadurch wird verhindert, daß das Restwasser mit zu hoher Geschwindigkeit ausgestoßen wird. Bei Anwendung dieser Maßnahme und auch der folgenden noch angesprochenen, kann man es sich erlauben, relativ hohe Heizleistungen zu verwenden, um den gesamten Brühvorgang in kurzer Zeit durchzuführen.

Auch wenn eine sich vergrößernde Dampfauslaßöffnung bereits zu einer wesentlichen Verbesserung führt, bringt die im Anspruch 4 angegebene kontinuierliche Vergrößerung die besten Ergebnisse.

Im Anspruch 5 sind bevorzugte spezielle Ausführungsformen von sich vergrößernden Dampfauslaßöffnungen angegeben, die einzeln oder in Kombination verwendbar sind.

Auch die im Anspruch 6 angegebene Maßnahme führt dazu, daß der Schwall des aus dem Steigrohr austretenden Brühwassers gleichmäßig und mit wenig Druck in den Filterbecher fließt. Die Auslaufkammer dämpft dabei auftretende Dampfstöße, indem sie das möglicherweise ruckweise austretende Wasser sammelt und kontinuierlich abgibt. Ein weiterer möglicher Effekt dieser Auslaufkammer ist darin zu sehen, daß Dampfblasen in ihr kondensieren, wodurch ebenfalls die Strömungsgeschwindigkeit des austretenden Wassers vermindert wird.

Die im Anspruch 7 angegebene Auslaufkammer führt zu einer besonders gleichmäßigen Strömung des austretenden Brühwassers.

Die in Anspruch 8 angegebenen Rippen in der Auslaufkammer führen zu einer Egalisierung des Flusses des Brühwassers.

Die im Anspruch 9 angegebene Maßnahme bewirkt, daß das sich in der Auslaufkammer sammelnde Wasser praktisch rückstandsfrei im noch heißen Zustand in den Filterbecher ausläuft.

Die Maßnahme nach Anspruch 10 führt dazu, daß das Brühwasser in der Heißwasserkammer nahezu vollständig ausgestoßen wird. Dadurch wird auch die Dampfbildung am Ende des Ausstoßzyklus herabgesetzt.

Durch die Maßnahme nach Anspruch 11 wird ebenfalls der Dampfbildung am Ende des Ausstoßzyklus entgegengewirkt. Durch entsprechende Dimensionierung kann sogar erreicht werden, daß die Dampfbildung bereits beendet wird, bevor das gesamte Brühwasser aus der Heißwasserkammer ausgestoßen ist.

Anspruch 12 gibt eine Weiterbildung an, mit der die Maschine beispielsweise von einer Achttassenmaschine auf eine Viertassenmaschine abänderbar ist, indem lediglich die Heizleistung verändert wird. Arbeitet man beispielsweise für die Achttassenmaschine mit einer sehr hohen Heizleistung, so kann es passieren, daß bei einer Reduktion des in die Heißwasserkammer fließenden Frischwassers der Brühzyklus zu schnell wird. Dem kann durch eine Verringerung der Heizleistung leicht begegnet werden, um die gewünschte Brühdauer von etwa 3 bis 4 Minuten wieder zu erreichen.

Anhand von in der Zeichnung dargestellten Ausführungsbeispielen wird die Erfindung im folgenden näher erläutert. Es zeigen :

Figur 1 ein Ausführungsbeispiel einer erfindungsgemäßen Kaffeemaschine im Schnitt entlang der Schnittlinie I-I in Fig. 2 ;

Figur 2 eine Draufsicht der Kaffeemaschine nach Fig. 1 ;

Figuren 3a bis 3c verschiedene Ausführungsformen des Endes des Steigrohrs, und

Figur 4 eine spezielle Ausführungsform der Auslaufkammer.

Die in der Zeichnung dargestellte Kaffeemaschine weist einen Sockel 1 auf, auf den ein hohlzylindrischer Behälter 2 aufgesetzt ist, der etwa im unteren Drittel ein sich horizontal erstreckendes Bodenteil 3 aufweist. Der über dem Bodenteil 3 liegende Teil des Behälters 2 dient als Frischwasserbehälter 4. Unter dem Bodenteil 3 liegt ein gegen das Bodenteil abgedichteter metallischer Topf 5, der zusammen mit dem Bodenteil 3 eine Heißwasserkammer 6 begrenzt. Das Bodenteil 7 des Topfes 5 weist einen horizontal verlaufenden äußeren Rand 8 auf, an den sich nach innen ein sich trichterförmig nach unten erstreckender Abschnitt 9 anschließt, der im Zentrum in einer Mulde 10 endet. Im horizontalen Rand 8 des Bodenteils 7 ist eine elektrische Heizung 12 angeordnet. In die Mulde 10 hinein ragt das Ende eines Steigrohres 13, das aus der Mulde heraus mit einem kurzen Stück vertikal geführt, dann horizontal abgewinkelt durch die äußere Wand des Topfes 5 abgedichtet verläuft, und außerhalb des Topfes 5 senkrecht nach oben geführt ist. Zur mechanischen Halterung des Steigrohres 13 und zu zeiner Wärmeisolierung ist es in einem Mantelrohr 14 geführt, das mit dem Sockel 1 verbunden ist. Das Steigrohr 13 ragt aus dem Mantelrohr 14 um ein kurzes Stück heraus und endet in einer um das Steigrohr schwenkbaren Auslaufkammer 15, die weiter unten noch beschrieben wird. Unter der Auslaßöffnung 16 der Auslaufkammer 15 ist ein Filterbecher 17 angeordnet, der über einen horizontalen Steg 18 an das Mantelrohr 14 angelenkt ist. Unter dem Filterbecher 17 ist in den Sockel 1 eine Warmhalteplatte 19 eingelassen, die ebenfalls mit einer elektrischen Heizung 20 versehen ist. Auf diese Warmhalteplatte 19 ist ein Kaffeeauffangtopf aufsetzbar.

Im Bodenteil 3 zwischen dem Frischwasserbehälter 4 und der Heißwasserkammer 6 befinden sich ein Wassereinlaßventil 23 und ein Entlüftungsrohr 24. Das Entlüftungsrohr 24 enthält in seinem oberen Teil ein Luftauslaßventil und es ist über einen Dichtkörper längsverschiebbar im Bodenteil 3 gelagert. Auf diese Verschiebbarkeit wird weiter unten noch eingegangen.

Die zu den beiden Heizungen 12 und 20 gehörenden elektrischen Schaltungen, einschließlich einem mit dem Rand 8 des Bodenteils 7 verbundenen Thermostaten, sind nicht näher dargestellt, da sie herkömmlicher Art sind.

Im folgenden wird die Funktionsweise der dargestellten Kaffeemaschine näher erläutert. In den oben offenen Frischwasserbehälter 4 wird die der gewünschten Menge Kaffee entsprechende Menge Frischwasser, beispielsweise 8 Tassen, eingegeben. Bei einer Achttassenmaschine ist das Volumen der Heißwasserkammer 6 so bemessen, daß sie etwa vier Tassen Wasser aufzunehmen imstande ist. Das in den Frischwasserbehälter 4 eingegebene Wasser fließt durch das Wassereinlaßventil 23 in die noch leere Heißwasserkammer 6, wobei die Luft aus der Heißwasserkammer 6 durch das Entlüftungsrohr 24 entweicht. Die Heißwasserkammer 6 füllt sich bis zum unteren Rand des Entlüftungsrohres. Bei eingeschalteter Heizung 12 erwärmt sich das in der Heißwasserkammer 6 befindliche Wasser bis zum Siedepunkt und kommt unter Dampfentwicklung zum Kochen. Durch den Druckanstieg in der Heißwasserkammer 6 schließen die beiden Ventile 23 und 24 und das kochende Wasser wird über das Steigrohr 13 in die Auslaufkammer 15 gedrückt und ergießt sich durch deren Auslaßöffnung 16 in den Filterbecher 17. Sobald die Dampfbildung in der Heißwasserkammer 6 beendet ist, fällt der Druck wieder ab und es kann neues Frischwasser durch das Wassereinlaßventil 23 in die Heißwasserkammer 6 nachfließen und der beschriebene Vorgang beginnt von neuem.

Mit dem vertikal verschiebbaren Entlüftungsrohr 24 kann die in die Heißwasserkammer 6 fließende Menge Wasser variiert werden, da sich die Heißwasserkammer 6 jeweils nur bis zum unteren Rand des Entlüftungsrohres 24 füllt. Will man beispielsweise bei einer Achttassenkaffeemaschine nur vier Tassen Kaffee bereiten, so wird das Entlüftungsrohr 24 so weit nach unten geschoben, daß sich die Heißwasserkammer 6 nur mit etwa zwei Tassen Wasser füllt, wodurch auch in diesem Fall der Kaffeebrühvorgang in zwei Zyklen abgeschlossen wird. Man geht davon aus, daß sich ein herkömmliches Tütenfilter, das bis zu etwa 2/3 seiner Höhe mit Brühwasser gefüllt wurde, nach etwa 2 min entleert hat. Die Heizung 12 ist nun so dimensioniert, daß der zweite Aufkochvorgang in etwa 2 min abgeschlossen ist, so daß der zweite Aufguß zu einem Zeitpunkt erfolgt, wenn sich das Tütenfilter gerade erst entleert hat oder noch nicht ganz entleert ist. Der gesamte Kaffeebrühvorgang wird dabei in etwa 4 min abgeschlossen. Sollte sich nach dem zweiten Aufguß noch etwas Restwasser im Frischwasserbehälter 4 befinden, findet ein dritter Aufguß statt, der aber wesentlich schneller auf den zweiten folgt, als der zweite auf den ersten, da die aufzuheizende Wassermenge geringer ist. Sollen bei einer Achttassenmaschine nur sechs Tassen Kaffee bereitet werden, läuft der zweite dreistufige Brühvorgang entsprechend schneller ab, so daß man in diesem Fall auf Brühzeiten von etwa 2, 5 bis 3 min kommt. Bei einer Achttassenmaschine wurde eine elektrische Heizung mit einer Aufnahmeleistung von 1 100 W als ausreichend angesehen.

Da die oben beschriebene Kaffeemaschine eine Heißwasserkammer 6 mit relativ großem Volumen und auch eine relativ starke Heizung 12 aufweist, baut sich beim Erreichen der Siedetemperatur des Wassers in der Heißwasserkammer 6 sehr schnell Druck auf, was dazu führt, daß die Heißwasserkammer 6 rasch entleert wird. Um zu verhindern, daß das Brühwasser mit zu hohem Druck in den Filterbecher 17 eintritt, sind besondere Vorkehrungen getroffen worden, die nachstehend näher erläutert werden.

Die Heißwasserkammer 6 hat ein Bodenteil 7 mit einem trichterförmigen Abschnitt 9, der in einer Mulde 10 endet. In diese Mulde 10 ragt das Ende des Steigrohrs 13 hinein. Die Heizung 12 ist zwischen dem trichterförmigen Abschnitt 9 und dem horizontalen Rand 8 des Bodenteils 7 angeordnet. Durch diese Dimensionierung kann erreicht werden, daß die Dampfentwicklung in der Heißwasserkammer 6 bereits zu einem Zeitpunkt vermindert oder zu null gemacht wird, als sich noch Brühwasser im unteren Teil der Heißwasserkammer 6 befindet. Dadurch wird der letzte Teil des Heißwassers, wenn er überhaupt ausgestoßen wird, mit vermindertem Druck ausgestoßen. Gerade dieser letzte Teil des ausgestoßenen Wassers ist aber problematisch da er ohne besondere Vorkehrungen mit Dampf vermischt ist und deshalb mit relativ hoher Geschwindigkeit austritt.

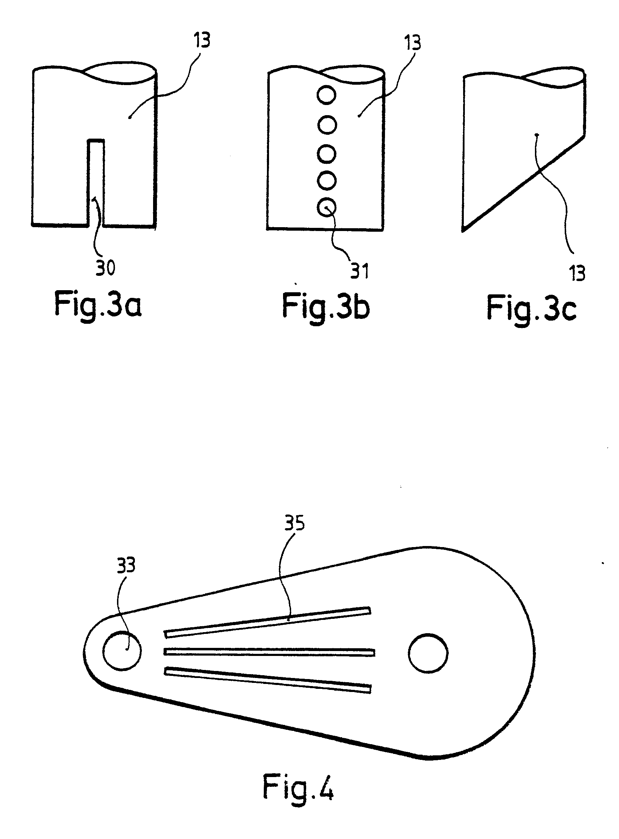

Eine andere oder auch zusätzliche Maßnahme, um dem geschilderten Problem entgegenzuwirken, besteht darin, schon relativ frühzeitig vor dem Austritt des letzten Restes Heißwasser aus der Heißwasserkammer 6 dafür zu sorgen, daß der Dampfdruck abgebaut wird. Zu diesem Zweck ist das heißwasserkammerseitige Ende des Steigrohrs 13 so ausgebildet, daß es mit absinkendem Wasserspiegel eine sich zunehmend vergrößernde Öffnung für den über dem Wasserspiegel stehenden Dampf freigibt. Ausführungsbeispiele dazu sind in den Fig. 3a bis 3c angegeben. Bei dem Ausführungsbeispiel nach Fig. 3a ist das Ende des Steigrohrs 13 mit einem vertikalen Schlitz 30 versehen, der so hoch ist, daß etwa das letzte Drittel des aus der Heißwasserkammer 6 austretenden Wassers bereits zunehmend mit Dampf vermischt austreten kann. Es können auch mehrere solcher Schlitze zueinander parallel, möglicherweise auch mit unterschiedlichen Längen angeordnet sein. In dem Ausführungsbeispiel nach Fig. 3b sind einzelne übereinanderliegende Öffnungen 31 im Ende des Steigrohres 13 vorgesehen. Auch dadurch wird bewirkt, daß der Rest des in der Heißwasserkammer 6 befindlichen Brühwassers mit Dampf vermischt wird, wodurch verhindert wird, daß ein zu hoher Dampfdruck entsteht. Es mag zweckmäßig sein, die einzelnen Öffnungen 31 mit unterschiedlichen Öffnungsquerschnitten auszubilden, wobei die unteren Öffnungen größeren Durchmesser als die oberen Öffnungen haben sollten. In dem Ausführungsbeispiel nach Fig. 3c ist das Ende des Steigrohres 13 etwa unter einem Winkel von 45° nach Art einer Injektionsnadel angeschnitten, wodurch auch hier bei abfallendem Wasserspiegel eine sich zunehmend vergrößernde Öffnung für austretenden Dampf entsteht. Eine weitere nicht näher dargestellte Möglichkeit der Dampfdruckreduktion besteht darin, das Ende des Steigrohres 13 aufzufächern, so daß es mehrere nebeneinanderliegende Eintrittsöffnungen aufweist, die jeweils in unterschiedlichen Höhen enden. Diese Maßnahmen können einzeln und auch in Kombination Verwendung finden.

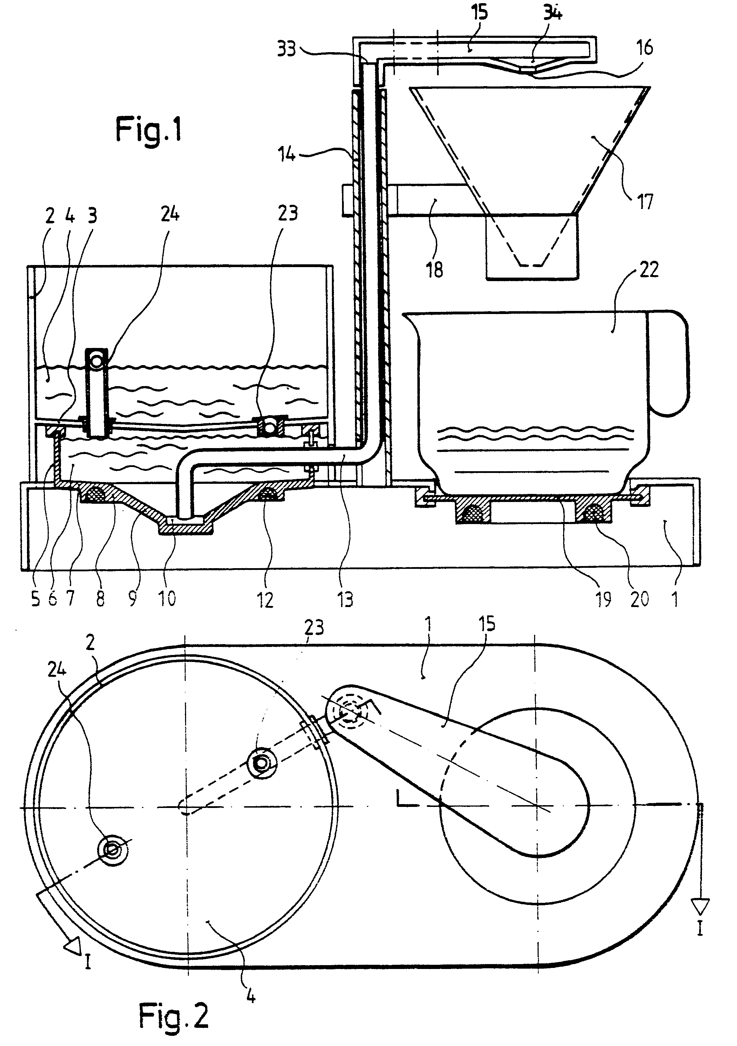

Eine andere und auch zusätzlich verwendbare Maßnahme, einen möglichst kontinuierlichen Brühwasserfluß zu erreichen besteht darin, am heißwasserkammerfernen Ende des Steigrohrs 13 eine speziell ausgebildete Auslaufkammer 15 vorzusehen, deren Querschnitt sich zwischen der Einlaßöffnung 33 und ihrer Auslaßöffnung 16 zunehmend erweitert. Durch diese Querschnittserweiterung wird ebenfalls erreicht, daß die Strömungsgeschwindigkeit des aus dem Steigrohr 13 austretenden Brühwassers vermindert wird. Diese Auslaufkammer 15 bewirkt zusätzlich, daß mit dem Brühwasser austretender Dampf teilweise kondensiert, wodurch sich ebenfalls eine Strömungsgeschwindigkeitsverminderung ergibt. Wie aus Fig. 1 ersichtlich ist, ist die Auslaßöffnung 16 in einer Mulde 34 angeordnet, wodurch verhindert wird, daß sich Brühwasser in der Auslaufkammer 15 sammelt ohne auszufließen.

Eine bevorzugte Ausführungsform einer Auslaufkammer 15 ist in Fig. 4 abgebildet, die vertikale und sich im wesentlichen zwischen der Einlaßöffnung 33 und der Auslaßöffnung 16 liegende Rippen 35 aufweist, die dazu dienen, das aus dem Steigrohr 13 in die Auslaufkammer 15 geführt Wasser in einem möglichst gleichmäßigen Strom zur Auslaßöffnung 16 zu bringen.

**Patentansprüche**

1. Elektrisch beheizte Filterkaffeemaschine, mit einem Frischwasserbehälter (4) und einer unmittelbar unterhalb des Frischwasserbehälters (4) angeordneten, elektrisch beheizbaren Heißwasserkammer (6), einem zwischen dem Frischwasserbehälter (4) und der Heißwasserkammer (6) angeordneten Wassereinlaßventil (23), einem Steigrohr (13), das die Heißwasserkammer (6) mit einem Brühwasserauslauf (16) verbindet, und einem vertikal in die Heißwasserkammer (6) ragenden Entlüftungsrohr (24), dadurch gekennzeichnet, daß in dem Entlüftungsrohr (24) ein Luftauslaßventil angeordnet ist und daß das Entlüftungsrohr (24) in seiner axialen Richtung verschiebbar ausgebildet ist, so daß es je nach der gewählten Stellung unterschiedlich weit in die Heißwasserkammer (6) hineinragt und dadurch bewirkt, daß die Heißwasserkammer (6) nur bis zum unteren Rand dieses Entlüftungsrohrs (24) gefüllt wird.

2. Filterkaffeemaschine nach Anspruch 1, dadurch gekennzeichnet, daß die Heißwasserkammer (6) derart ausgebildet ist, daß sie über das Wassereinlaßventil (23) etwa 30 % bis 60 % der Volumenmenge Frischwasser aufnimmt, die für einen vollständigen Kaffeeaufguß benötigt wird.

3. Kaffeemaschine nach Anspruch 1 oder 2, dadurch gekennzeichnet, daß das heißwasserkammerseitige Ende des Steigrohrs (13) vertikal verläuft und es derart ausgebildet ist, daß es mit abnehmendem Wasserstand in der Heißwasserkammer (6) eine sich zunehmend vergrößernde Dampfauslaßöffnung (30, 31, Fig. 3c) freigibt.

4. Kaffeemaschine nach Anspruch 3, dadurch gekennzeichnet, daß die Dampfauslaßöffnung (30, 31, Fig. 3c) derart ausgebildet ist, daß sie sich mit abnehmendem Wasserstand kontinuierlich vergrößert.

5. Kaffeemaschine nach Anspruch 3 oder 4, dadurch gekennzeichnet, daß die Dampfauslaßöffnung in Form eines oder mehrerer Längsschlitze (30), übereinander angeordneter Öffnungen (31), einer Anschrägung des Endes des Steigrohrs (13, Fig. 3c) und/oder mit sich verzweigenden Rohrenden, die in unterschiedlichen Höhen enden, ausgebildet ist.

6. Kaffeemaschine nach einem der Ansprüche 1 bis 5, dadurch gekennzeichnet, daß das brühwasserkammerferne Ende des Steigrohrs (13) in einer Auslaufkammer (15) endet, die eine Einlaßöffnung (33) und eine im Abstand davon angeordnete Auslauföffnung (16) aufweist, deren Querschnittsfläche im Bereich der Auslauföffnung (16) senkrecht zur Verbindungslinie zwischen Einlaßöffnung (33) und Auslaßöffnung (16) wenigstens das zehnfache der Querschnittsfläche des Steigrohrs (13) beträgt.

7. Kaffeemaschine nach Anspruch 6, dadurch gekennzeichnet, daß die Auslaufkammer (15) mit von der Einlaßöffnung (33) zur Auslaßöffnung (16) hin zunehmendem Querschnitt ausgebildet ist.

8. Kaffeemaschine nach Anspruch 6 oder 7, dadurch gekennzeichnet, daß in der Auslaufkammer (15) sich im wesentlichen von der Einlaßöffnung (33) zur Auslaßöffnung (16) erstreckende Rippen (35) ausgebildet sind.

9. Kaffeemaschine nach einem der Ansprüche 6 bis 8, dadurch gekennzeichnet, daß die Auslaßöffnung (16) am tiefsten Punkt einer mulde (34) ausgebildet ist.

10. Kaffeemaschine nach einem der Ansprüche 1 bis 9, dadurch gekennzeichnet, daß das Bodenteil (7) der Heißwasserkammer (6) muldenförmig ausgebildet ist und das Ende des Steigrohrs (13) im Bereich des tiefsten Punktes der Mulde (9, 10) endet.

11. Kaffeemaschine nach Anspruch 10, dadurch gekennzeichnet, daß die Heizung (12) im Bodenbereich der Heißwasserkammer (6) mit Abstand vom unteren Bereich der Mulde (10) angeordnet ist.

12. Kaffeemaschine nach einem der Ansprüche 1 bis 11, dadurch gekennzeichnet, daß die Heizleistung für die Heizung (12) an die gewünschte Menge zu bereitenden Kaffees derart angepaßt ist, daß die Gesamtbrühdauer unabhängig von der Menge des zu bereitenden Kaffees auf etwa 3 bis 4 Minuten konstant haltbar ist.

**Claims**

1. An electrically heated filter coffee machine, comprising a fresh water container (4) and an electrically heatable hot-water chamber (6) disposed immediately below the container (4), a water inlet valve (23) disposed between the container (4) and the hot water chamber (6), a riser (13) connecting the hot water chamber (6) to a boiling water outlet (16), and a venting tube (24) projecting vertically into the hot water chamber (6), characterised in that the venting tube (24) contains an air outlet valve and the venting tube (24) is slidable axially so that it projects different distances into the hot-water chamber (6) according to the position selected, and thus causes the hot-water chamber (6) to be filled only to the bottom edge of the venting tube (24).

2. A filter coffee machine according to claim 1, characterised in that the hot-water chamber (6) is so constructed that it receives through the water inlet valve (23) about 30 % to 60 % of the volume of fresh water required for a complete coffee infusion.

3. A coffee machine according to claim 1 or 2, characterised in that the end of the riser (13) on the hot-water chamber side extends vertically and is so constructed that as the water level in the hot-water chamber (6) falls it releases an increasingly large steam outlet aperture (30, 31, Fig. 3c).

4. A coffee machine according to claim 3, characterised in that the steam outlet aperture (30, 31, Fig. 3c) is so constructed as to increase continuously with falling water level.

5. A coffee machine according to claim 3 or 4, characterised in that the steam outlet aperture is in the form of one or more slots (30), superposed apertures (31), a bevelling of the end of the riser (13, Fig. 3c) and/or with branching tube ends terminating at different levels.

6. A coffee machine according to any one of claims 1 to 5, characterised in that that end of the riser (13) which is remote from the hot-water chamber terminates in an outlet chamber (15) having an inlet aperture (33) and, spaced therefrom, an outlet aperture (16), the cross-sectional area of which in the region of the outlet aperture (16) perpendicular to the connecting line between the inlet aperture (33) and the outlet aperture (16) is at least 10 times the cross-sectional area of the riser (13).

7. A coffee machine according to claim 6, characterised in that the outlet chamber (15) is constructed with a cross-section increasing from the inlet aperture (33) to the outlet aperture (16).

8. A coffee machine according to claim 6 or 7, characterised in that ribs (35) are formed in the outlet chamber (15) and extend substantially from the inlet aperture (33) to the outlet aperture (16).

9. A coffee machine according to any one of claims 6 to 8, characterised in that the outlet aperture (16) is formed at the lowest point of a trough (34).

10. A coffee machine according to any one of claims 1 to 9, characterised in that the base part (7) of the hot-water chamber (6) is constructed in the form of a trough and the end of the riser (13) terminates in the region of the lowest point of the trough (9, 10).

11. A coffee machine according to claim 10, characterised in that the heater (12) in the bottom zone of the hot-water chamber (6) is disposed at a distance from the bottom zone of the trough (10).

12. A coffee machine according to any one of claims 1 to 11, characterised in that the heating power for the heater (12) is so adapted to the required amount of coffee to be made that the total coffee-making time can be kept constant at about 3 to 4 minutes irrespective of the amount of coffee to be made.

**Revendications**

1. Machine à café-filtre chauffée électriquement, comportant un réservoir d'eau fraîche (4) et une chambre d'eau chaude (6) placée directement sous le réservoir d'eau fraîche (4) et pouvant être chauffée électriquement, une soupape d'admission d'eau (23) placée entre le réservoir d'eau fraîche (4) et la chambre d'eau chaude (6), un tube ascendant (13) qui relie la chambre d'eau chaude (6) avec une sortie d'eau d'infusion (16), et un tube de désaération (24) dépassant verticalement dans la chambre d'eau chaude (6), caractérisée en ce qu'une soupape d'évacuation d'air est placée dans le tube de désaération (24) et en ce que le tube de désaération (24) est réalisé mobile dans sa direction axiale, de sorte qu'en fonction de la position choisie, il dépasse plus ou moins dans la chambre d'eau chaude (6) en conséquence de quoi la chambre d'eau chaude (6) n'est remplie que jusqu'au rebord inférieur de ce tube de désaération (24).

2. Machine à café-filtre selon la revendication 1, caractérisée en ce que la chambre d'eau chaude (6) est réalisée de telle sorte qu'elle reçoit par l'intermédiaire de la soupape d'admission d'eau (23) environ 30 à 60 % du volume d'eau fraîche nécessaire à une infusion complète du café.

3. Machine à café-filtre selon la revendication 1 ou 2, caractérisée en ce que l'extrémité du tube ascendant (13) se trouvant du côté de la chambre d'eau chaude, se prolonge verticalement et est réalisée de telle sorte qu'elle libère, lorsque le niveau d'eau baisse dans la chambre d'eau chaude (6), une ouverture d'évacuation de vapeur (30, 31, fig. 3c) allant en s'élargissant.

4. Machine à café-filtre selon la revendication 3, caractérisée en ce que l'ouverture d'évacuation de vapeur (30, 31, fig. 3c) est réalisée de telle sorte qu'elle s'élargit en continu lorsque le niveau d'eau baisse.

5. Machine à café-filtre selon la revendication 3 ou 4, caractérisée en ce que l'ouverture d'évacuation de vapeur est réalisée sous la forme d'une ou plusieurs fentes longitudinales (30), d'ouvertures (31) disposées les unes au dessus des autres, d'une inclinaison de l'extrémité du tube ascendant (13, fig. 3c) et/ou avec des extrémités ramifiées qui aboutissent à des hauteurs différentes.

6. Machine à café-filtre selon l'une des revendications 1 à 5, caractérisée en ce que l'extrémité du tube ascendant (13) éloignée de la chambre d'eau chaude aboutit dans une chambre d'évacuation (15) qui présente une ouverture d'admission (33) et une ouverture d'évacuation (16) écartée de cette dernière et dont la surface de section transversale au niveau de l'ouverture d'évacuation (16), perpendiculairement à la ligne de liaison entre l'ouverture d'admission (33) et l'ouverture d'évacuation (16), est au moins dix fois plus importante que la surface de la section transversale du tube ascendant (13).

7. Machine à café-filtre selon la revendication 6, caractérisée en ce que la chambre d'évacuation (15) est réalisée avec une section transversale s'agrandissant de l'ouverture d'admission (33) en direction de l'ouverture d'évacuation (16).

8. Machine à café-filtre selon la revendication 6 ou 7, caractérisée en ce que des nervures (35) se prolongeant pour l'essentiel de l'ouverture d'admission (33) jusqu'à l'ouverture d'évacuation (16) sont réalisées dans la chambre d'évacuation (15).

9. Machine à café-filtre selon l'une des revendications 6 à 8, caractérisée en ce que l'ouverture d'évacuation (16) est réalisée au point le plus bas d'une cuvette (34).

10. Machine à café-filtre selon l'une des revendications 1 à 9, caractérisée en ce que la pièce de fond (7) de la chambre d'eau chaude (6) est réalisée en forme de cuvette et en ce que l'extrémité du tube ascendant (13) aboutit dans la zone du point le plus bas de la cuvette (9, 10).

11. Machine à café-filtre selon la revendication 10, caractérisée en ce que le chauffage (12) est placé dans la zone du fond de la chambre d'eau chaude (6), écarté par rapport à la zone inférieure de la cuvette (10).

12. Machine à café-filtre selon l'une des revendications 1 à 11, caractérisée en ce que la puissance calorifique du chauffage (12) est adaptée de telle sorte à la quantité désirée de café à préparer que la durée globale d'infusion peut être maintenue constante entre 3 et 4 minutes environ, indépendamment de la quantité de café à préparer.

0 135 611

Fig.1

Fig.2

13

30

Fig.3a

13

31

Fig.3b

13

13

Fig.3c

35

33

Fig.4